# EUROPÄISCHE PATENTSCHRIFT

(11) **EP 1 066 643 B1**
(45) Veröffentlichungstag und Bekanntmachung des Hinweises auf die Patenterteilung: **20.02.2002**
(21) Anmeldenummer: 99924751.3
(22) Anmeldetag: 26.03.1999
(51) Int. Cl.: H01H 9/16

(54) **HOCHSPANNUNGSANLAGE MIT WENIGSTENS EINER EINRICHTUNG ZUR OPTISCHEN ERFASSUNG EINES PARAMETERS**
HIGH VOLTAGE SYSTEM HAVING AT LEAST ONE DEVICE FOR OPTICALLY DETECTING A PARAMETER
INSTALLATION HAUTE TENSION DOTEE AU MOINS D'UN EQUIPEMENT DESTINE A LA DETECTION OPTIQUE D'UN PARAMETRE

(30) Priorität: 27.03.1998 DE 29806211 U
(43) Veröffentlichungstag der Anmeldung: 10.01.2001
(73) Patentinhaber: SIEMENS AKTIENGESELLSCHAFT, 80333 München (DE)
(72) Erfinder: MEINHERZ, Manfred, D-13467 Berlin (DE); SUHR, Michael, D-16548 Glienicke (DE)
(86) Internationale Anmeldenummer: DE9901001
(87) Internationale Veröffentlichungsnummer: WO9949484

(56) Entgegenhaltungen:
- DE-A- 19 513 638
- DE-C- 19 708 460
- DE-U- 29 806 211
- FR-A- 2 713 308

## Beschreibung

Die Erfindung bezieht sich auf eine Hochspannungsanlage mit Hochspannungsgeräten und mit wenigstens einer Einrichtung zur optischen Erfassung eines Parameters eines Hochspannungsgerätes, wobei die Einrichtung zur optischen Erfassung wenigstens einen optischen Sensor aufweist, in dessen Erfassungsbereich sich die Änderung eines zu erfassenden Parameters optisch erkennbar darstellt.

Eine derartige Hochspannungsanlage ist beispielsweise aus der DE 197 08 460 C1 bekannt. Dort wird in einem Hochspannungsgerät, das dort durch einen Hochspannungstrennschalter gebildet ist, als Parameter die Schaltstellung des Trennschalters mittels eines optischen Sensors erfaßt.

Die erfaßten Meßwerte können als Lichtsignale mittels Lichtwellenleitern oder als elektronische Signale zu einer Verarbeitungseinrichtung weitergeleitet werden.

Bei derartigen Einrichtungen besteht das Problem, daß die jeweils erfaßten Parameter einzelnen Hochspannungsgeräten zugeordnet werden müssen, um entsprechende Schlüsse aus den Meßwerten zu ziehen.

Beispielsweise ist es wichtig, bei jeweils einem Hochspannungstrennschalter pro Phase die einzelnen Meßwerte den entsprechenden Phasen fehlerfrei zuordnen zu können.

Der vorliegenden Erfindung liegt daher die Aufgabe zugrunde, bei einer Hochspannungsanlage der eingangs genannten Art eine fehlerfreie Zuordnung der erfaßten Parameter zu bestimmten Hochspannungsgeräten zu ermöglichen.

Die Aufgabe wird erfindungsgemäß dadurch gelöst, daß in dem Erfassungsbereich eine optisch erkennbare Kodierung angeordnet ist, die von dem Sensor zusätzlich zu dem zu erfassenden Parameter erfaßbar ist und eine Zuordnung des Parameters zu einem bestimmten Ort der Hochspannungsanlage ermöglicht.

Die Kodierung kann beispielsweise durch eine in bestimmter Weise gefärbte oder gemusterte Oberfläche, einen Balkencode, Ziffern oder Buchstaben realisiert sein.

Die erfaßte Kodierung kann dann elektronisch zugeordnet und umgewandelt werden, so daß eine nachgeordnete Verarbeitungseinrichtung unabhängig von möglicherweise vorliegenden Installationsfehlern den jeweils erfaßten Parameter einem bestimmten Hochspannungsgerät z. B. mittels der Betriebsmittelkennzeichnung zuordnen kann.

Vorteilhaft kann vorgesehen sein, daß der Sensor durch eine elektronisch Kamera gebildet ist.

In diesem Fall kann durch die Kamera auch eine komplizierte Kodierung erkannt werden.

Die Kodierung kann am Ort der Verarbeitungseinrichtung entweder durch Bedienungspersonal oder auch durch eine digitale Bildverarbeitung und Analyse zugeordnet werden.

Besonders vorteilhaft läßt sich die Erfindung bei Hochspannungsschaltern einsetzen, wobei als Parameter die Schaltstellung des Hochspannungsschalters effektiv erfaßbar ist.

Weitere vorteilhafte Gestaltungen der Erfindung sind den Unteransprüchen zu entnehmen.

Im folgenden wird die Erfindung anhand eines Ausführungsbeispiels in einer Zeichnung gezeigt und anschließend beschrieben.

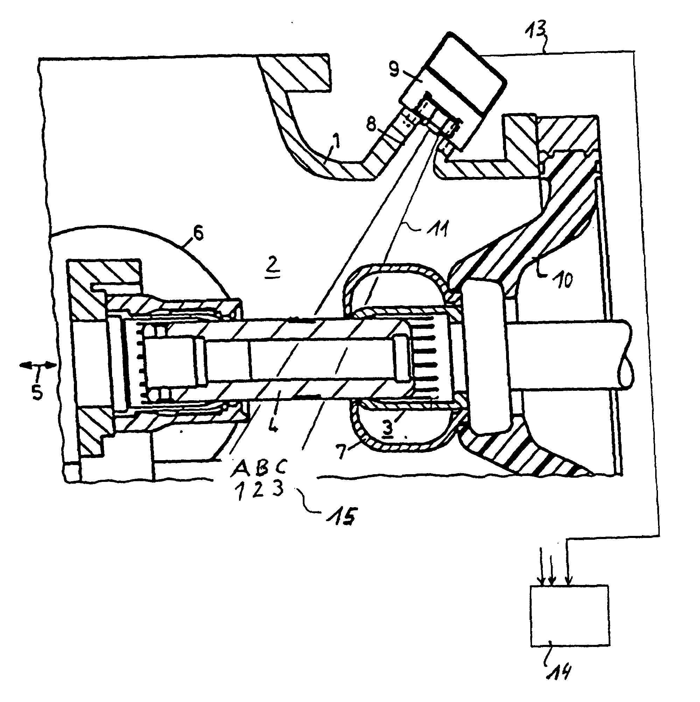

Dabei zeigt die Figur schematisch im Längsschnitt einen Trennschalter mit einer Überwachungskamera.

In einem Kapselungsgehäuse 1 einer Hochspannungsanlage ist ein Trennschalter 2 mit einem feststehenden Tulpenkontaktstück 3 und einem beweglichen hohlen Kontaktstift 4 angeordnet. Der bewegliche Kontaktstift 4 ist in Richtung der Pfeile 5 axial beweglich und mittels eines nicht dargestellten Antriebes antreibbar.

Das feststehende Tulpenkontaktstück 3 ist von einer Abschirmelektrode 7 umgeben und in einem feststehenden Isolierstützer 10 abgestützt. Der bewegliche Kontaktstift 4 ist von einer Abschirmelektrode 6 abgeschirmt.

An einem Stutzen 8 des Kapselungsgehäuses 1 ist gasdicht eine Kamera 9 angeflanscht, deren Überwachungsbereich durch den Kegel 11 angedeutet ist.

Mittels der Kamera 9 wird ein Bild von dem Trennschalter 2 aufgenommen, das eine Erfassung der Schaltstellung erlaubtz und das über die Leitung 13 an eine Verarbeitungseinrichtung 14 übertragen wird. Innerhalb des Übertragungsbereichs 11 der Kamera 9 ist an der Innenwand des Kapselungsgehäuses 1 eine Kodierung 15 in Form von Buchstaben und Zahlen angeordnet, die eine Zuordnung des Kamerabildes zu dem bestimmten Trennschalter 2 erlauben. Auf diese Weise ist das in der Verarbeitungseinrichtung 14 zur Verfügung stehende Bild von dem Trennschalter 2 von anderen, von nicht dargestellten Kameras übertragenen Bildern anderer Hochspannungsgeräte unterscheidbar.

Die Kodierung kann auch als Balkencode oder als ein anderer, vorzugsweise maschinenlesbarer Code ausgebildet sein. Sie kann auch auf der Oberfläche von unter Hochspannung stehenden Bauteilen angeordnet sein.

Die zeichnerische Darstellung der Kodierung ist symbolisch zu verstehen und aus dem Blickwinkel der Kamera 9 dargestellt.

## Patentansprüche

1. Hochspannungsanlage mit Hochspannungsgeräten und mit wenigstens einer Einrichtung (9,14) zur optischen Erfassung eines Parameters eines Hochspannungsgerätes (2), wobei die Einrichtung (9,14) zur optischen Erfassung wenigstens einen optischen Sensor (9) aufweist, in dessen Erfassungsbereich (11) sich die Änderung eines zu erfassenden Parameters optisch erkennbar darstellt,
**dadurch gekennzeichnet, daß** in dem Erfassungsbereich (11) eine optisch erkennbare Kodierung (15) angeordnet ist, die von dem Sensor (9) zusätzlich zu dem zu erfassenden Parameter erfaßbar ist und eine Zuordnung des Parameters zu einem bestimmten Ort der Hochspannungsanlage ermöglicht.

2. Hochspannungsanlage nach Anspruch 1,
**dadurch gekennzeichnet, daß** daß der Sensor (9) durch eine elektronisch Kamera gebildet ist.

3. Hochspannungsanlage nach Anspruch 1 oder 2,
**dadurch gekennzeichnet, daß** das Hochspannungsgerät (2) ein Hochspannungsschalter ist.

4. Hochspannungsanlage nach Anspruch 3,
**dadurch gekennzeichnet, daß** der erfaßte Parameter die Schaltstellung des Hochspannungsschalters (2) ist.

5. Hochspannungsanlage nach Anspruch 1 oder einem der folgenden,
**dadurch gekennzeichnet, daß** zur digitalen Verarbeitung der Meßwerte des Sensors (9) und zur Auswertung der Kodierung (15) die Einrichtung (9,14) zur optischen Erfassung wenigstens eine Verarbeitungseinrichtung (14) aufweist.

## Claims

1. High-voltage system having high-voltage units and having at least one device (9, 14) for optically detecting a parameter of a high-voltage unit (2), with the device (9, 14) for optical detection having at least one optical sensor (9), in the range of detection (11) of which the change in a parameter that is to be detected is presented in an optically identifiable manner, **characterized in that** arranged in the range of detection (11) there is an optically identifiable code (15) which can be detected by the sensor (9) in addition to the parameter to be detected and which renders possible association of the parameter with a specific location of the high-voltage system.

2. High-voltage system according to claim 1, **characterized in that** the sensor (9) is formed by an electronic camera.

3. High-voltage system according to claim 1 or 2, **characterized in that** the high-voltage unit (2) is a high-voltage switch.

4. High-voltage system according to claim 3, **characterized in that** the parameter that is detected is the switch position of the high-voltage switch (2).

5. High-voltage system according to claim 1 or one of the following claims, **characterized in that** in order to process the measured values of the sensor (9) digitally and in order to evaluate the code (15), the device (9, 14) for optical detection has at least one processing device (14).

## Revendications

1. Installation haute tension, comprenant des appareils haute tension et au moins un dispositif (9, 14) de détection optique d'un paramètre d'un appareil de haute tension, le dispositif (9, 14) de détection optique comportant au moins un capteur (9) optique dans la zone (11) de détection duquel la modification d'un paramètre à détecter est représentée d'une manière permettant de le reconnaître optiquement,
**caractérisée en ce qu'**il est prévu, dans la zone (11) de détection, un codage (15) qui peut être reconnu optiquement, qui peut être détecté par le capteur (9) en plus du paramètre à détecter et qui permet d'associer le paramètre à un emplacement déterminé de l'installation haute tension.

2. Installation haute tension suivant la revendication 1, **caractérisée en ce que** le capteur (9) est formée par une caméra électronique.

3. Installation haute tension suivant la revendication 1 ou 2, **caractérisée en ce que** l'appareil de haute tension est un interrupteur haute tension.

4. Installation haute tension suivant la revendication 3, **caractérisée en ce que** le paramètre détecté est la position fermée de l'interrupteur (2) haute tension.

5. Installation haute tension suivant la revendication 1 ou l'une des suivantes, **caractérisée en ce que** pour le traitement numérique des valeurs de mesure du capteur (9) et pour l'interprétation du codage (15), le dispositif (9, 14) de détection optique comporte au moins un dispositif (14) de traitement.
